# EUROPEAN PATENT SPECIFICATION

(11) **EP 1 340 358 B1**
(45) Date of publication and mention of the grant of the patent: **23.04.2008**
(21) Application number: 01994679.7
(22) Date of filing: 16.11.2001
(51) Int. Cl.: H04L 29/08, H04L 12/28

(54) **METHOD AND SYSTEM FOR FINDING APPLICATION MODULES IN A NETWORK**
VERFAHREN UND SYSTEM ZUM FINDEN VON ANWENDUNGSMODULEN IN EINEM NETZWERK
PROCEDE ET SYSTEME PERMETTANT DE TROUVER DES MODULES D'APPLICATION DANS UN RESEAU

(30) Priority: 29.11.2000 NL 1016741
(43) Date of publication of application: 03.09.2003
(73) Proprietor: Koninklijke KPN N.V., 9726 AE Groningen (NL)
(72) Inventor: ROOS VAN RAADSHOOVEN, Leon, NL-2724 VS Zoetermeer (NL); STAALMAN, Hans, NL-2331 SZ Leiden (NL); SCHEFFEL, Jan, NL-2716 JJ Zoetermeer (NL)
(74) Representative: Wuyts, Koenraad Maria
(86) International application number: PCT/EP2001/013399
(87) International publication number: WO 2002/045381

(56) References cited:
- WO-A-00/04730
- PRIYANTHA N B ET AL: "The Cricket Location-Support System" MOBICOM. PROCEEDINGS OF THE ANNUAL INTERNATIONAL CONFERENCE ON MOBILE COMPUTING AND NETWORKING, XX, XX, 6 August 2000 (2000-08-06), XP002181658

## Description

### BACKGROUND

The invention relates to a method and system for finding an application module in a network containing application modules, search modules and user modules, the application module corresponding with a search profile based on the user module.

The invention is aimed in particular, but not exclusively, at the use of a technique such as JINI (www.jini.org), in which an application module ("application service") registers with one or more service search modules ("lookup services"), stating the service name and offered service parameters. On the other side, user modules ("service users components") search for desired application services by making use of search modules, whereby the user modules give a search instruction with the desired service name, service category and/or parameters.

This technology, proposed by JINI amongst others, offers a method to assemble data services - in particular mobile data services - simply from small network components (application services/application modules). It is comparable with the Network Plug & Play concept. However, these techniques do not offer as standard any support for location dependency, i.e. support for enabling a user module to find an application module as a function of the location of the user module or of the application module.

Document WO 00/04730 describes a method for providing personalized location-based services to a network subscriber involving the selection of location based services based on subscriber profile information.

### THE INVENTION

It is an object of the present invention to provide a method and system according to claim 1 and 2 respectively in which support is offered in a transparent manner to enable a user module to find an application module as a function of the location of the user module or of the application module. Transparent is here understood to mean: without the need for drastic changes to the hardware or software, either on the user side or on the side of the application modules.

In brief, the invention proposes an extra network layer, taking the form of a "position module" ("position server"), active on the one hand in the co-operation between the application modules and the search module, and on the other hand active in the communication between the user module and the search module. The invention aims to provide, by means of the position module, up-to-date location information relating to existing application modules such that, combined with one another, position-dependent application modules are formed. The position module also provides up-to-date location information relating to the user components and therefore caters for the possibility of location-dependent matching of demand (by the users) and supply (by the application services). The matching process - in the lookup module - attempts to "match" supply and demand on the basis of search parameters in the search profile. According to the invention, the lookup module of the user module is instructed to find (location-independently) an application module that matches the search profile. The search module, however, searches in co-operation with the position module for an application module that matches the parameters in the search profile, but that also matches specific position attributes (that do not need to be included in the search profile), for example an application module in the most direct proximity of the user module.

A great advantage of the present invention is that application modules can be designed as if they were location independent. However, by using a specific registration method (a standard method in the technique in use, only with a specific address) the position module has the effect of making the application module location dependent and is only found by service users that have a certain, matching location-based or distance-based 'relationship' with the application module, for example in the proximity of the service user module.

The invention will now be described in more detail with reference to two embodiments.

### IMPLEMENTATION

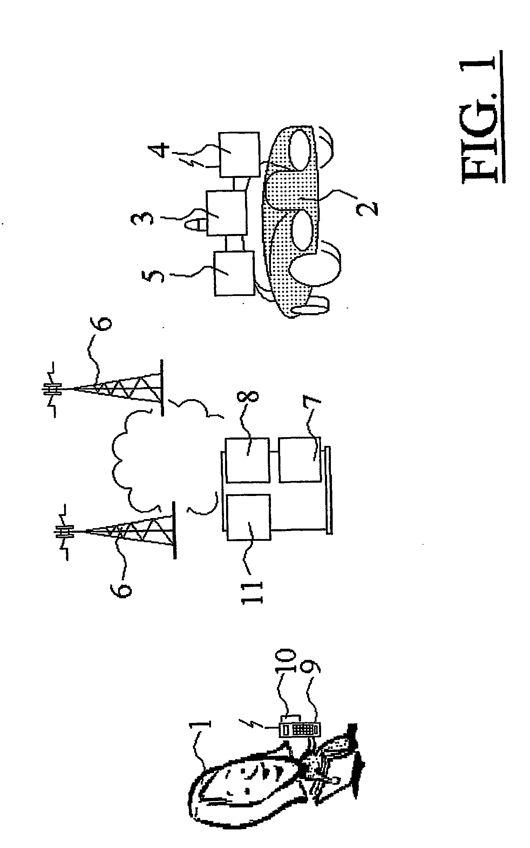

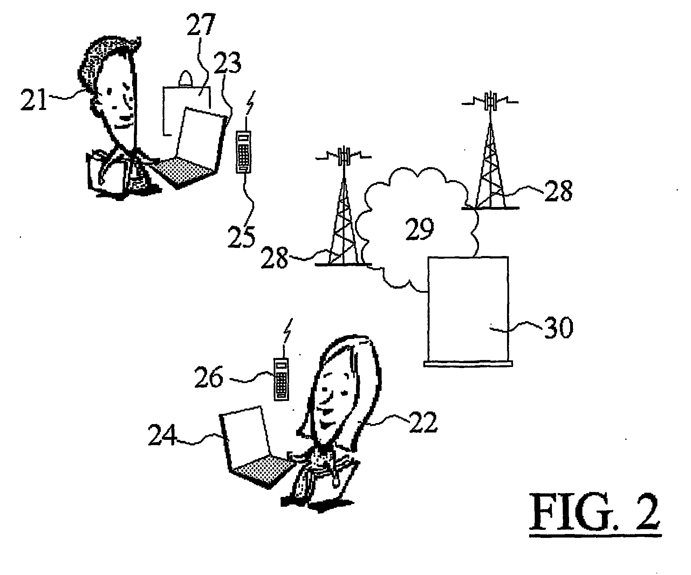

Figure 1 shows by way of example a first practical implementation of the invention; figure 2 shows a second implementation.

Figure 1 shows schematically a system according to the invention that can be used by a tourist 1 searching for a taxi 2.

The taxi 2 comprises a GPS ("Global Positioning System") module 3 for geometric localisation of the taxi 2, a GSM module 4 for mobile, wireless data transmission and a computer that runs a JINI (software) application module 5. By means of its GSM module 4 and the public GSM network, represented by a number of base stations 6, the taxi 2 registers via a position module 7 with a public "lookup service" represented by a search module 8, stating the attributes price and taxi capacity. Via the GSM module 4 and the GSM network, the position module 7 receives the geometric location information of the taxi 2 detected by the GPS module 3. To this location information the position module 7 adds the registration information in the search module 8, which results in combined registration with the search module 8. The registration information now comprises: taxi price, taxi capacity and taxi location. Even when the taxi 2 moves around, the position module 7 keeps the position parameters in the search module 8 up to date by means of periodical updates of the location information via the GSM network from the GPS module 3 in the taxi 2.

The tourist 1 makes use of a wireless GSM terminal 9 that comprises an application module 10 with a "taxi button" as "user interface". The GSM terminal 9 comprises means for data transmission via the GSM network (represented by the base stations 6), as well as means for location finding of the terminal 9 via "triangulation", i.e. location finding by measuring the field strength of at least three base stations 6, whose location is known. Via his/her terminal 9, the tourist 1 specifies as search parameters for example the maximum price and/or the number of passengers and then presses the "taxi button", whereupon the terminal 9 transfers the search parameters via the GSM network to the public search module 8. The terminal 9 also passes on, via the GSM network, the location of the terminal 9, obtained via "triangulation", to a position module 11, that adds this location information to the search parameters entered by the tourist 1. The location of the terminal 9 can, incidentally, also be passed on from the GSM network to the position module 11 instead of from the terminal 9, as is represented above. In this case, it is a simple matter to update the location of the tourist 1, even if he moves about, in the position module 11 without the tourist 1 needing to activate this himself. In connection with privacy concerns, however, objections may be raised to the use of this option.

The above-mentioned actions give rise to a number of "supply parameters" in the search module that relate to the taxi, including its location, as well as a number of "demand parameters" that relate to the user, here the tourist 1, including his/her location. The search module now performs a "matching" operation by which a taxi (since in practice there are a large number of taxis, which all - automatically - send their supply parameters to the search module) is selected that matches the wish - defined by the tourist's demand parameters, including his/her location. The search module then sends via the GSM network a list of "best matches" to the terminal 9, and the tourist 1 selects one of the taxis and calls it up via the route: GSM network - search module 8 - GSM network - GMS module 4, stating the search parameters entered by the tourist 1 and the location of the tourist 1, furnished by the position module 11.

Figure 2 shows a second application of a method/system according to the invention.

A user 21 and a user 22 wish, by means of the system according to the invention, to contact supporters of a particular football club who live in the same neighbourhood. Both users have a PC terminal 23 and 24 respectively and a mobile (GSM) terminal 25 and 26 respectively. User 21 has a GPS module 27, connected to a data port of his PC, while the position of (the GSM terminal of) user 22 can be determined by "triangulation" via three GSM base stations 28, forming part of the public GSM network 29.

User 21 registers, via the application activated on PC 23 module, GSM terminal 25 and the GSM network 29, with a search module 30 ("Lookup Service") and enters a search term, for example the name of the football club in question. In the background a (software) position module that is also activated on the PC 23 also passes on the location information, received from the GPS receiver 27, to the search module 30.

User 22 registers by means of his PC 24 - activated by an application module - his GSM terminal 26 and the public GSM network 29, with the search module 30 and asks the question whether any more supporters of the particular football club live in the neighborhood. The application module (user module) sends the search terms on to the search module, while at the same time the position module activates the GSM terminal 26 in order to specify the position information obtained from "triangulation". It should be noted that the position module may be located in the PC 24, as "plugin" for the application/user module, or - at the other end of the connection - as additional module with the search module. In the latter case, the position module requests the GSM terminal 26 to send its location information to the search module.

A matching process is then performed in the search module 30 and the resulting "best match" is sent to the PCs 23 and 24 of the two users 21 and 22 respectively.

It is clear that - for example in the latter example - one terminal can function as "server", viz. terminal 23, which by means of its application module registers with the search module 30 (including its position via its position module), after which terminal 24 can function as "client", namely for searching with the search module 30, by means of its user module and its position module, for "matching" application modules, in this case the application module plus position module that are active within the PC 23 of user 21. User 22 could for the same purpose first register with the search module, in which case the user would make use of an application module in PC 24 that, in the strict sense, has the character of a "server", instead of a "client". It is evident that in cases such as these, use will preferably be made of software modules that can function both as "server" and as "client". In both cases, however, use is made, according to the invention, of an additional position module that gathers the information about the geographical position of the user (of his GSM terminal or his GPS, etc.) and adds this to the search information.

## Claims

1. Method for finding an application module (5) in a network comprising application modules (5) on the side of a service provider as well as user modules (10) on the side of a service user, by means of an intermediary search module (8), said application module (5) corresponding as closely as possible to a search profile that is based on the user module (10), which method comprises the following steps:
a. each application module (5) registers service parameters in the search module (8); and
b. from each application module (5) a first position module (7) receives geographical parameters that are related to that application module (5) and said first position module (7) registers said geographical parameters together with the other parameters registered by the application module (5);
**characterised in that** the method further comprises the following steps:
c. a user module (10) sends a search profile, comprising parameters to be matched by an application module (5) to be found, to the search module (8);
d. from the user module (10) a second position module (11) receives geographical parameters that are related to that user module (10) and said second position module (11) adds said geographical parameters to the search profile; and
e. the search module (8) calculates the best match from, on the one hand, the service parameters and the geographical parameters that are related to each of the application modules (5) and, on the other hand, the parameters from the received search profile, including the parameters to be matched by the searched-for application module (5) and the geographical parameters that were added by the second position module (11).

2. System for finding an application module (5) in a network comprising application modules (5) on the side of a service provider as well as user modules (10) on the side of a service user, by means of an intermediary search module (8), said application module (5) corresponding as closely as possible to a search profile that is based on the user module (10), whereby:
a. each application module (5) is adapted to register service parameters in the search module (8); and
b. a first position module (7) is adapted to receive from each application module (5) geographical parameters that are related to that application module (5) and said first position module (7) is adapted to register said geographical parameters together with the other parameters registered by the application module (5);
**characterised in that**:
c. a user module (10) is adapted to send a search profile, comprising parameters to be matched by an application module (5) to be found, to the search module (8);
d. a second position module (11) is adapted to receive from the user module (10) geographical parameters that are related to that user module (10) and said second position module (11) is adapted to add said geographical parameters to the search profile; and
e. the search module (8) is adapted to calculate the best match from, on the one hand, the service parameters and the geographical parameters that are related to each of the application modules (5) and, on the other hand, the parameters from the received search profile, including the parameters to be matched by the searched-for application module (5) and the geographical parameters that were added by the second position module (11).

## Patentansprüche

1. Verfahren zum Finden eines Anwendungsmoduls (5) in einem Netzwerk, umfassend Anwendungsmodule (5) auf der Seite eines Dienstanbieters, sowohl als auch Benutzermodule (10) auf der Seite eines Dienstnutzers, durch das Mittel eines zwischengeschalteten Suchmoduls (8), wobei das besagte Anwendungsmodul (5) so nah als möglich einem Suchprofil entspricht, welches auf dem Benutzermodul (10) basiert, welches Verfahren die folgenden Schritte umfasst:
a.) jedes Anwendungsmodul (5) registriert Dienstparameter im Suchmodul (8); und
b.) von jedem Anwendungsmodul (5) empfängt ein erstes Positionsmodul (7) geographische Parameter, die sich auf das Anwendungsmodul (5) beziehen und das erste Positionsmodul (7) registriert die besagten geographischen Parameter zusammen mit anderen Parametern, die durch das Anwendungsmodul (5) registriert werden;
**dadurch gekennzeichnet, dass** das Verfahren weiterhin die folgenden Schritte umfasst:
c.) ein Benutzermodul (10) sendet ein Suchprofil, das Parameter umfasst, die von einem Anwendungsmodul (5), welches zu finden ist, zusammenzuführen sind, an ein Suchmodul (8);
d.) von dem Benutzermodul (10) empfängt ein zweites Positionsmodul (11) geographische Parameter, die sich auf das besagte Benutzermodul (10) beziehen, und das besagte zweite Positionsmodul (11) fügt die geographischen Parameter zu dem Suchprofil hinzu; und
e.) das Suchmodul (8) berechnet die beste Übereinstimmung, aus, von der einen Seite aus gesehen, den Dienstparametern und den geographischen Parametern, die sich auf jedes der Anwendungsmodule (5) beziehen, und, auf der anderen Seite, den Parametern von dem gesuchten Suchprofil, einschliesslich der Parameter, die von dem gesuchten Anwendungsmodul (5) zusammenzuführen sind, und der geographischen Parameter, die von dem zweiten Positionsmodul (11) hinzugefügt worden sind.

2. System zum Auffinden eines Anwendungsmodul (5) in einem Netzwerk, umfassend Anwendungsmodule (5) auf der Seite eines Dienstanbieters, sowohl als auch Benutzermodule (10) auf der Seite eines Dienstbenutzers, durch das Mittel eines zwischengeschalteten Suchmoduls (8), wobei das besagte Anwendungsmodul (5) so dicht als möglich an ein Suchprofil angepasst ist, welches auf dem Benutzermodul (10) basiert,
a) jedes Anwendungsmodul (5) ausgestaltet ist, um Dienstparameter in dem Suchmodul (8) zu registrieren;
b.) ein erstes Positionsmodul (7) ausgestaltet ist, um von jedem Anwendungsmodul (5) geographische Parameter zu erhalten, die sich auf das besagte Anwendungsmodul (5) beziehen, und wobei das besagte erste Positionsmodul (7) ausgestaltet ist, um die besagten geographischen Parameter zusammen mit anderen Parametern, die durch das Anwendungsmodul (5) registriert sind, zu registrieren;
**dadurch gekennzeichnet, dass**:
c.) ein Benutzermodul (10) ausgestaltet ist, um ein Suchprofil, umfassend Parameter, die mit einem Anwendungsmodul (5), welches zu finden ist, übereinstimmen, an ein Suchmodul (8) zu senden;
d.) ein zweites Positionsmodul (11) ausgestaltet ist, um von dem Benutzermodul (10) geographische Parameter zu empfangen, die sich auf das besagte Benutzermodul (10) beziehen, und wobei das besagte zweite Positionsmodul (11) ausgestaltet ist, um besagte geographische Parameter zu dem Suchprofil hinzuzufügen; und
e.) das Suchmodul (8) ausgestaltet ist, um die beste Übereinstimmung von, einerseits, den Dienstparametern und den geographischen Parametern, die sich auf jedes der Anwendungsmodule (5) beziehen, und, auf der anderen Seite, der Parameter von dem empfangenen Suchprofil zu berechnen, umfassend die Parameter, die von dem gesuchten Anwendungsmodul (5) und den geographischen Parametern, die durch das zweite Positionsmodul (11) hinzugefügt worden sind, in Übereinstimmung zu bringen sind.

## Revendications

1. Procédé destiné à trouver un module d'application (5) dans un réseau comprenant des modules d'application (5) du côté d'un fournisseur de service ainsi que des modules utilisateur (10) du côté d'un utilisateur de service, au moyen d'un module de recherche intermédiaire (8), ledit module d'application (5) correspondant le plus étroitement possible à un profil de recherche qui est basé sur le module utilisateur (10), lequel procédé comprend les étapes suivantes :
a. chaque module d'application (5) enregistre des paramètres de service dans le module de recherche (8) ;
et
b. à partir de chaque module d'application (5), un premier module de position (7) reçoit les paramètres géographiques qui sont associés à ce module d'application (5) et ledit premier module de position (7) enregistre lesdits paramètres géographiques conjointement avec les autres paramètres enregistrés par le module d'application (5) ;
**caractérisé en ce que** le procédé comprend en outre les étapes suivantes :
c. un module utilisateur (10) envoie un profil de recherche, comprenant les paramètres devant être mis en correspondance avec un modèle d'application (5) à trouver, au module de recherche (8) ;
d. à partir du module utilisateur (10), un second module de position (11) reçoit les paramètres géographiques qui sont associés à ce module utilisateur (10) et ledit second module de position (11) ajoute lesdits paramètres géographiques au profil de recherche ; et
e. le module de recherche (8) calcule la "meilleure correspondance" à partir, d'une part, des paramètres de service et des paramètres géographiques qui sont associés à chacun des modules d'application (5) et, d'autre part, des paramètres provenant du profil de recherche reçu, comportant les paramètres devant être mis en correspondance avec le module d'application (5) recherché et les paramètres géographiques qui ont été ajoutés par le second module de position (11) .

2. Système destiné à trouver un module d'application (5) dans un réseau comprenant des modules d'application (5) du côté d'un fournisseur de service ainsi que des modules utilisateur (10) du côté d'un utilisateur de service, au moyen d'un module de recherche intermédiaire (8), ledit module d'application (5) correspondant le plus étroitement possible à un profil de recherche qui est basé sur le module utilisateur (10), sachant que :
a. chaque module d'application (5) est adapté pour enregistrer les paramètres de service dans le module de recherche (8) ; et
b. un premier module de position (7) est adapté pour recevoir à partir de chaque module d'application (5) les paramètres géographiques qui sont associés à ce module d'application (5) et ledit premier module de position (7) est adapté pour enregistrer lesdits paramètres géographiques conjointement avec les autres paramètres enregistrés par le module d'application (5) ;
**caractérisé en ce que** :
c. un module utilisateur (10) est adapté pour envoyer un profil de recherche, comprenant les paramètres devant être mis en correspondance avec un module d'application (5) à trouver, au module de recherche (8) ;
d. un second module de position (11) est adapté pour recevoir à partir du module utilisateur (10) les paramètres géographiques qui sont associés à ce module utilisateur (10) et ledit second module de position (11) est adapté pur ajouter lesdits paramètres géographiques au profil de recherche ; et
c. le module de recherche (8) est adapté pour calculer la "meilleure correspondance" à partir, d'une part, des paramètres de service et des paramètres géographiques qui sont associés à chacun des modules d'application (5) et, d'autre part, des paramètres provenant du profil de recherche reçu, comportant les paramètres devant être mis en correspondance avec le module d'application recherché (5) et les paramètres géographiques qui ont été ajoutés par le second module de position (11).
